# EUROPEAN PATENT APPLICATION

(11) **EP 2 785 018 A2**
(43) Date of publication of application: **01.10.2014**
(21) Application number: 14156124.1
(22) Date of filing: 21.02.2014
(51) Int. Cl.: H04L 29/08

(54) **Information processing device, transmission control method, and transmission control program**

(30) Priority: 28.03.2013 JP 2013070681
(71) Applicant: FUJITSU LIMITED, Kawasaki-shi, Kanagawa 211-8588 (JP)
(72) Inventor: Suzuki, Kazuhiro, Kanagawa, 211-8588 (JP)
(74) Representative: HOFFMANN EITLE

(57) **Abstract**

A physical server (10) includes a storage unit (13a) which stores address information of at least one virtual machine (15,17) which is run on a same physical machine. The physical server (10) determines whether a destination of a packet is stored in the storage unit (13a) when the virtual machine transmits the packet. The physical server (10) transmits the packet to the destination by using a virtual device (16a) connected to a virtual switch (16a) which relays a communication between the virtual machines when it is determined that the destination is stored in the storage unit (13a). The physical server (10) transmits the packet to the destination by using a pass-through device (16b) which is connected to a physical device (11a) transmitting a packet to another physical machine when it is determined that the destination is not stored in the storage unit (13a).

## Description

### FIELD

The embodiments discussed herein are related to an information processing device, a transmission control method, and a transmission control program.

### BACKGROUND

Server virtualization technology to allow a virtual server referred to as a VM (virtual machine) to run on a physical server such as an information processing device is utilized. Software referred to as a VMM (virtual machine monitor) and the like which executes various types of control regarding the VM such as generation of the VM is allowed to run on the physical server. In general, an OS (operating system) running on the VM is referred to as a guest OS. A hypervisor is known as an example of the VMM.

A method using a virtual switch and a method using PCI (peripheral component interconnect) pass-through are known as a method of controlling communication between the VMs running on the physical server. The virtual switch being a virtual network switch running by software relays the communication by bridge connection between virtual devices of the guest OSs. The PCI pass-through is a method in which each guest OS includes a device driver and directly executes the communication by using the physical device without intervention of the hypervisor.

### [Patent Document 1] Japanese Laid-open Patent Publication No. 2010-237737

However, the above-described technology has a problem that there is a difference in communication performance between the communication between the VMs on the same physical server and the communication between the VMs on the different physical servers, so that it is not possible to effectively exert the communication performance.

For example, in the method using the virtual switch, the performance in the communication between the VMs on the different physical servers is deteriorated, and in the method using the PCI pass-through, it is not possible to execute flexible control by the virtual switch in the communication between the VMs on the same physical server.

Accordingly, it is an object in one aspect of an embodiment of the invention to provide the information processing device, the transmission control method, and the transmission control program capable of satisfying both of improvement in communication performance between the virtual machines and the flexible control by the virtual switch.

### SUMMARY

According to an aspect of the embodiments, an information processing device (10) includes a storage unit (13a) that stores address information of at least one virtual machine (15,17) which is run on a same physical machine; a determining unit (13b) that determines whether a destination of a packet is stored in the storage unit (13a) when the virtual machine transmits the packet; and a transmission control unit (16c,18c) that transmits the packet to the destination by using a virtual device (16a) connected to a first virtual switch (14c) which relays a communication between the virtual machines when the determining unit (13b) determines that the destination is stored in the storage unit (13a) and transmits the packet to the destination by using a pass-through device (16b) which is connected to a physical device (11a) transmitting a packet to another physical machine when the determining unit (13b) determines that the destination is not stored in the storage unit (13a).

### BRIEF DESCRIPTION OF DRAWINGS

FIG. 1 is a view of an overall configuration example of a system according to a first embodiment;
FIG. 2 is a view of a hierarchical structure example of a physical server according to the first embodiment;
FIG. 3 is a view of an example of information stored in an address table;
FIG. 4 is a view illustrating an address space;
FIG. 5 is a flowchart of a flow of a packet transmitting process according to the first embodiment;
FIG. 6 is a view illustrating an example of duplicating the address table;
FIG. 7 is a view illustrating an example of sharing the address table; and
FIG. 8 is a view of a hardware configuration example of the physical server.

### DESCRIPTION OF EMBODIMENTS

Preferred embodiments will be explained with reference to accompanying drawings.

Meanwhile, this invention is not limited by the embodiments.

### [a] First Embodiment

### Overall Configuration

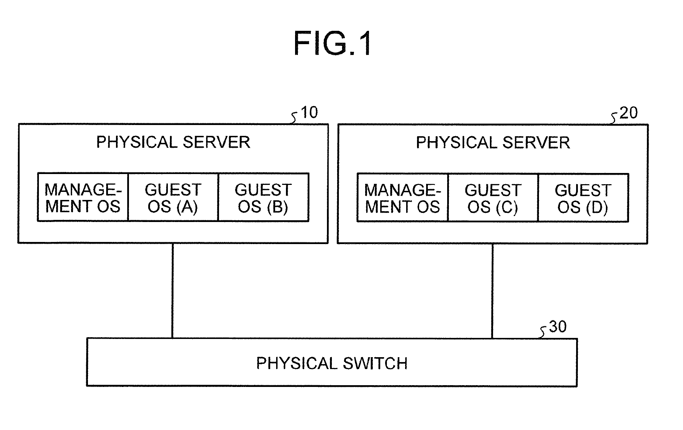

FIG. 1 is a view of an overall configuration example of a system according to a first embodiment. As illustrated in FIG. 1, in the system, a physical server 10 and a physical server 20 are connected to each other through a physical switch 30. The physical switch 30 being an example of a network device such as a rooter, a switching hub, and a L2 (layer 2) switch, for example, relays a packet between the physical servers to a destination.

The physical servers 10 and 20 are examples of a server device which executes a virtual machine (VM) and executes a process similar to that of a web server and an application server by using the virtual machine.

As illustrated in FIG. 1, the physical server 10 executes a management OS (operating system), a guest OS (A), and a guest OS (B) as the virtual machines. Similarly, the physical server 20 executes a management OS, a guest OS (C), and a guest OS (D) as the virtual machines. Meanwhile, the number of guest OSs herein described is merely an example; an optional number of guest OSs may be executed.

In such a state, each of the physical servers 10 and 20 includes a storage unit which stores address information of the running virtual machine. When the packet is transmitted from the virtual machine, the physical servers 10 and 20 determine whether the destination of the packet is stored in the storage unit. Thereafter, when it is determined that the destination is stored in the storage unit, the physical servers 10 and 20 transmit the packet to the destination by using a virtual device connected to a virtual switch. On the other hand, when it is determined that the destination is not stored in the storage unit, the physical servers 10 and 20 transmit the packet to the destination by using a pass-through device.

In this manner, the physical servers 10 and 20 store the address of the virtual machine running on the server, transmit a transmitted packet by using the virtual switch when the destination thereof is stored, and transmit the same by using PCI pass-through when the destination thereof is not stored. As a result, the physical servers 10 and 20 may satisfy both of improvement in communication performance between the virtual machines and flexible control by the virtual switch.

### Hierarchical Structure

Next, a hierarchical structure of each of the physical servers 10 and 20 is described. Meanwhile, the physical servers 10 and 20 have similar configurations, so that the physical server 10 is herein described.

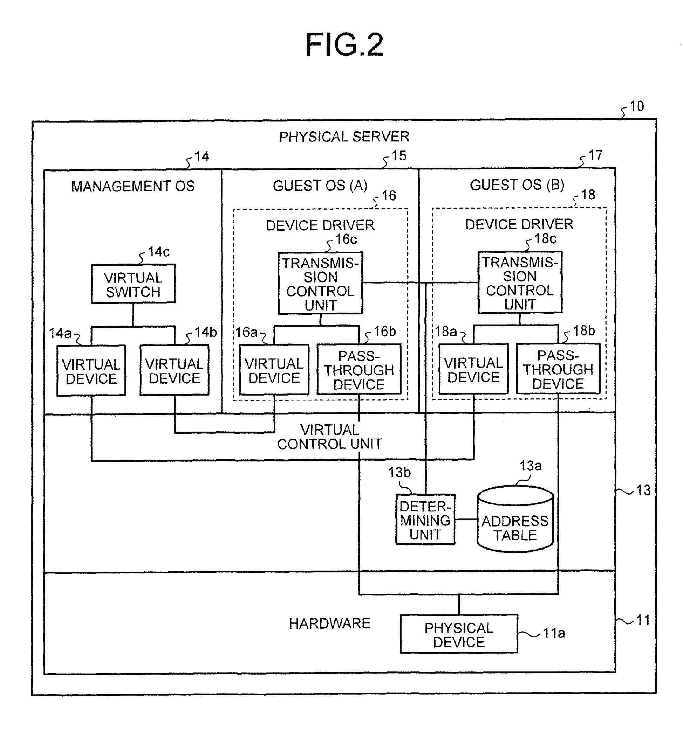

FIG. 2 is a view of a hierarchical structure example of the physical server according to the first embodiment. As illustrated in FIG. 2, the physical server 10 forms the hierarchical structure of hardware 11, a virtual control unit 13, and each VM. Meanwhile, each VM is a virtual machine program generated and managed by the virtual control unit 13.

The hardware 11 is hardware which forms the physical server. The hardware 11 includes a physical device 11a. The physical device 11a being an interface which controls communication with the physical server 20 is a network interface card and the like, for example.

The virtual control unit 13 is a processor which allows the VM to run. Meanwhile, there is a hypervisor program and the like as an example of the virtual control unit 13. The virtual control unit 13 including an address table 13a and a determining unit 13b executes creation, deletion, migration and the like of the VM.

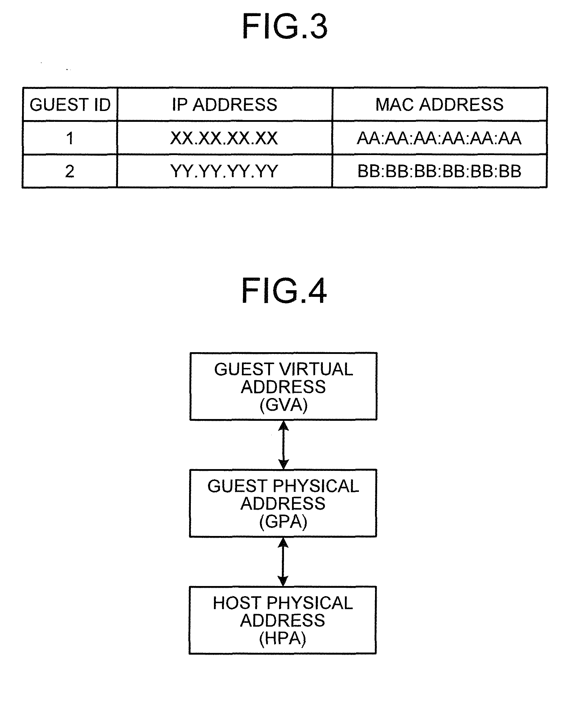

The address table 13a is a table which stores the address information of the VM running on the physical server 10. FIG. 3 is a view of an example of the information stored in the address table. As illustrated in FIG. 3, the address table 13a stores "guest ID, IP address, and MAC (media access control) address" so as to be associated with one another.

"Guest ID" is an identifier which identifies the VM. "IP address" is an IP address of the VM. "MAC address" is a MAC address of the VM. In a case of FIG. 3, it is indicated that "XX.XX.XX.XX" is set as the IP address and "AA:AA:AA:AA:AA:AA" is set as the MAC address for the VM whose guest ID is "1".

Meanwhile, the information herein stored is updated by the virtual control unit 13. For example, when the virtual control unit 13 detects the creation, deletion, and migration of the VM, this updates according to detected information. Although both of the IP address and the MAC address are illustrated in FIG. 3, the address is not limited to them and it is also possible that there is only one of them.

It is also possible that a storage device such as a memory stores information similar to that of the address table 13a and the virtual control unit 13 extracts the address information from the storage device and generates the address table 13a to hold. The virtual control unit 13 may also refer to the address table 13a held by the storage device such as the memory.

The determining unit 13b is a processor which determines whether the destination of the packet is stored in the address table 13a when the packet is transmitted from the VM which runs on the physical server 10. Specifically, the determining unit 13b receives the destination of the transmitted packet from a transmission control unit 16c or a transmission control unit 18c illustrated in FIG. 2 to execute a determining process. Then, the determining unit 13b transmits a determination result to the transmission control unit 16c or the transmission control unit 18c being a transmission source.

For example, the determining unit 13b receives "YY.YY.YY.YY" from the transmission control unit 16c as a destination address. Then, the determining unit 13b refers to the address table 13a to determine whether "YY.YY.YY.YY" is stored. In a case of this example, the determining unit 13b responds that this determines that the destination is stored to the transmission control unit of the packet transmission source.

The virtual control unit 13 is the processor which allows the VM to run by assigning the same with a virtual processor and a virtual memory. Meanwhile, the virtual memory is a virtual memory realized by assigning a predetermined area in a memory of the physical server 10 as a memory used by the guest OS and the management OS. The virtual processor is a virtual processor realized by assigning predetermined processing ability in a processor of the physical server 10 as a processor used by the guest OS and the management OS.

For example, the virtual control unit 13 allows a management OS 14, a guest OS (A) 15, and a guest OS (B) 17 to run. Meanwhile, the number of VMs herein illustrated is merely an example and the number is not limited thereto.

The management OS 14 being one of the guest OSs whose various types of control are executed by the virtual control unit 13 is the VM having different authority from other guest OSs. For example, the management OS 14 provides a virtual bridge device which relays communication between the guest OS (A) 15 and the guest OS (B) 16. Specifically, the management OS 14 includes a virtual device 14a, a virtual device 14b, and a virtual switch 14c.

Each of the virtual device 14a and the virtual device 14b is a virtual network interface referred to as a net back and the like. Out of them, the virtual device 14b is connected to a virtual device 16a of the guest OS (A) 15 to receive the packet from the guest OS (A) 15 and transmit the packet to the guest OS (A) 15. The virtual device 14a is connected to a virtual device 18a of the guest OS (B) 17 to receive the packet from the guest OS (B) 17 and transmit the packet to the guest OS (B) 17.

The virtual switch 14c is a virtual bridge interface which connects the virtual devices to each other. The virtual switch 14c connects the virtual device 14a and the virtual device 14b to each other. For example, the virtual switch 14c receives the packet transmitted from the guest OS (A) 15 through the virtual devices 16a and 14b. Then, the virtual switch 14c transmits the packet to the guest OS (B) 17 through the virtual devices 14a and 18a.

The guest OS (A) 15 is one of the guest OSs whose various types of control are executed by the virtual control unit 13. The guest OS (A) 15 executes an application and executes transmission and reception of the packet to and from another VM and the like. The guest OS (A) 15 includes a device driver 16 and controls the packet transmission by the device driver 16.

The device driver 16 includes the virtual device 16a, a pass-through device 16b, and the transmission control unit 16c. The virtual device 16a is a virtual network interface referred to as a net front and the like. The virtual device 16a is connected to the virtual device 14b of the management OS 14. The virtual device 16a executes the transmission and reception of the packet to and from another VM through the virtual device 14b.

The pass-through device 16b is a virtual network interface capable of directly operating the physical device 11a without intervention of the virtual control unit 13. The pass-through device 16b executes the transmission and reception of the packet to and from the VM on another physical server through the physical device 11a by using Vt-d technology.

Specifically, the pass-through device 16b executes transfer of the packet and data by DMA (direct memory access). For example, the pass-through device 16b writes the data in a memory space of the physical device 11a by using the DMA. The physical device 11a reads the data written in the memory space to transmit to the destination.

An address space of the physical server 10 is herein described. FIG. 4 is a view illustrating the address space. As illustrated in FIG. 4, in the physical server 10, the address space is managed by a host physical address (HPA), a guest physical address (GPA), and a guest virtual address (GVA). The host physical address is a physical address space of the physical server 10. The guest physical address being the address space managed by each VM such as the guest OS and the management OS as a physical address is a virtual address space provided by the virtual control unit 13. The guest virtual address is the address space managed by each VM such as the guest OS and the management OS as a virtual address.

In general, each VM such as the guest OS and the management OS executes conversion from the guest virtual address to the guest physical address. The virtual control unit 13 executes conversion from the guest physical address to the host physical address. In the communication by the pass-through device 16b, the physical device 11a may access a memory space of the guest OS by the address conversion by the physical device 11a of the hardware 11 at the time of DMA transfer. That is to say, the memory space of the physical device 11a may be associated with the memory space of the guest OS (A) 15.

The transmission control unit 16c is a processor which switches a device to which the packet is output depending on whether the destination thereof from the guest OS (A) 15 is stored in the address table 13a. Specifically, the transmission control unit 16c receives the packet transmitted from the guest OS (A) 15 and extracts the destination of the received packet. Then, the transmission control unit 16c transmits the extracted destination to the determining unit 13b of the virtual control unit 13 to request the determining process. Then, the transmission control unit 16c switches the device to which the packet is output based on the determination result received from the determining unit 13b.

For example, the transmission control unit 16c refers to a header of the packet received from the VM to extract "YY.YY.YY.YY" as the destination address. Then, the transmission control unit 16c transmits extracted "YY.YY.YY.YY" to the determining unit 13b of the virtual control unit 13.

When the determining unit 13b determines that "YY.YY.YY.YY" is stored in the address table 13a, the transmission control unit 16c outputs the transmitted packet to the virtual device 16a connected to the virtual switch 14c. On the other hand, when the determining unit 13b determines that "YY.YY.YY.YY" is not stored in the address table 13a, the transmitted packet is output to the pass-through device 16b.

That is to say, the transmission control unit 16c transmits the packet by using the virtual switch 14c when the destination of the packet is the VM on the same physical server 10. On the other hand, the transmission control unit 16c transmits the packet by using the pass-through device 16b when the destination of the packet is the VM on the different physical server 20.

The guest OS (B) 17 is one of the guest OSs whose various types of control are executed by the virtual control unit 13. The guest OS (B) 17 executes an application and executes the transmission and reception of the packet to and from another VM and the like. The guest OS (B) 17 includes a device driver 18 and controls the packet transmission by the device driver 18.

Meanwhile, each of the virtual device 18a, a pass-through device 18b, and the transmission control unit 18c of the device driver 18 executes a process similar to that of the virtual device 16a, the pass-through device 16b, and the transmission control unit 16c, respectively, of the guest OS (A) 15, so that the description thereof is omitted.

### Process Flow

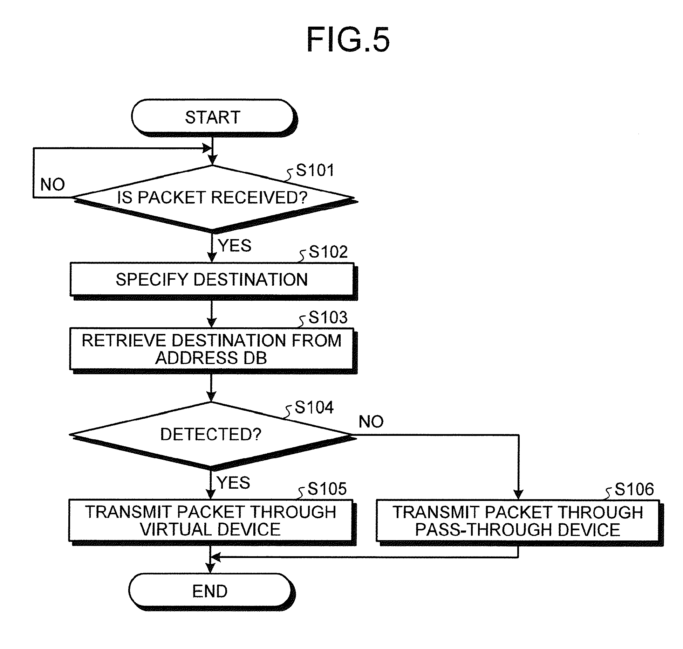

FIG. 5 is a flowchart of a flow of a packet transmitting process according to the first embodiment. Herein, an example in which the guest OS (A) 15 transmits the packet is described as an example.

As illustrated in FIG. 5, the transmission control unit 16c receives the packet transmitted by the application and the like executed by the guest OS (A) 15 (S101: Yes). The transmission control unit 16c extracts the destination from the packet to output to the determining unit 13b (S102).

Then, the determining unit 13b retrieves the extracted destination of the packet from the address table 13a (S103). Thereafter, when the transmission control unit 16c is notified of the fact that the destination is retrieved from the address table 13a by the determining unit 13b (S104: Yes), this transmits the packet to the destination by using the virtual device 16a (S105).

On the other hand, when the transmission control unit 16c is notified of the fact that the destination is not retrieved from the address table 13a by the determining unit 13b (S104: No), this transmits the packet to the destination by using the pass-through device 16b (S106).

As described above, the physical server 10 according to the first embodiment may transmit by using the virtual switch as for the communication in the physical server 10 and may transmit by using the PCI pass-through as for the communication across the physical servers. Therefore, the physical server 10 may flexibly control the communication in the physical server by using the virtual switch and may process the communication between the physical servers at a high speed.

### [b] Second Example

Although the example in which the virtual control unit 13 holds the address table 13a is described in the first embodiment, the example is not limited thereto and various modes may be adopted. Therefore, a mode of holding the address table 13a is described in a second embodiment.

### Duplication

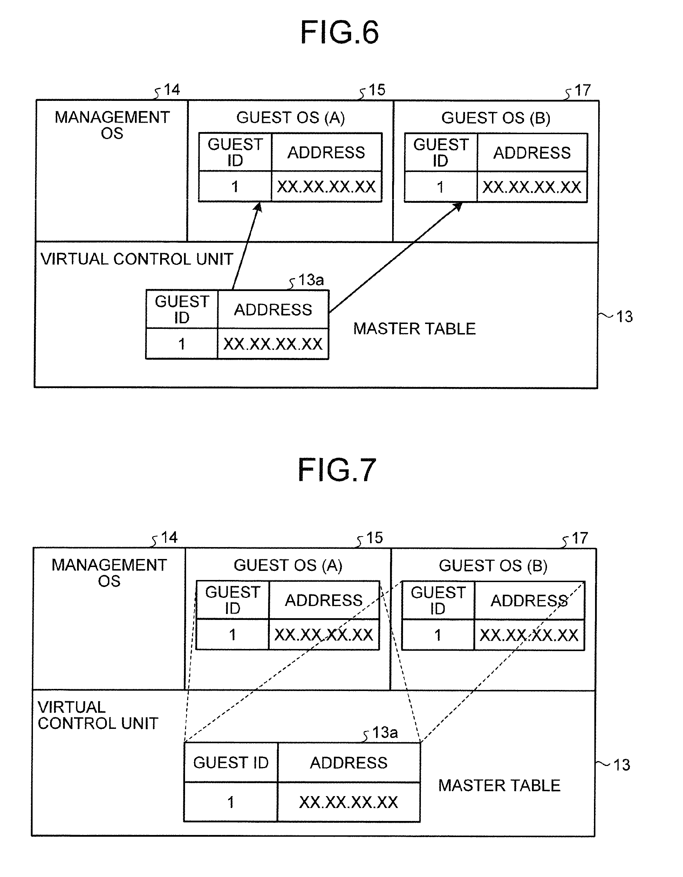

FIG. 6 is a view illustrating an example in which the address table is duplicated. As illustrated in FIG. 6, the virtual control unit 13 duplicates the address table 13a to distribute to each guest OS. Each guest OS holds a duplicate of the address table 13a in a virtual memory space. In this case, the device driver of each guest determines whether the destination of the transmitted packet is held in the address table.

The virtual control unit 13 updates the address table 13a when the VM is created or deleted. At that time, the virtual control unit 13 distributes the updated address table 13a to each guest OS. Meanwhile, the virtual control unit 13 may distribute an entire updated address table 13a or may distribute only a difference thereof. As a result, each guest OS may hold a latest address table.

In this manner, each guest OS holds the address table, so that each guest OS may determine the device to which the packet is transmitted without referring to the virtual control unit 13 each time this transmits the packet. Therefore, the transmitting process may be efficiently executed and the communication performance between the virtual machines is further improved.

Shared Memory

FIG. 7 is a view illustrating an example in which the address table is shared. As illustrated in FIG. 7, the virtual control unit 13 holds the address table 13a on a shared memory, read-only access to which is open to each guest OS. In this manner, it is possible to inhibit the virtual control unit 13 from distributing the address table to the guest OS each time the address table 13a is updated. Furthermore, each guest OS may determine the device to which the packet is transmitted without referring to the virtual control unit 13 each time this transmits the packet.

### [c] Third Embodiment

Although the embodiments of the present invention are heretofore described, the present invention may also be carried out in various different modes in addition to the above-described embodiments. Different embodiments are hereinafter described.

### Virtual Switch in Device Driver

For example, when it is described while taking the guest OS (A) 15 as an example, the virtual device 16a and the pass-through device 16b in a device driver 16 may be connected to each other by a virtual switch. In this manner, each guest OS may use a MAC learning table of the virtual switch in place of the address table. Each guest OS may learn again the address table by a GARP (gratuitous address resolution protocol) transmitted from the virtual control unit 13 when the VM is created or deleted.

### System

It is also possible to manually perform an entire or a part of the process described to be automatically performed among each process described in this example. Alternatively, it is also possible to automatically perform an entire or a part of the process described to be manually performed by a well-known method. In addition, a handling procedure, a control procedure, a specific name, and information including various data and parameters described above in the document and illustrated in the drawings may be optionally changed if not otherwise specified.

Each component of each device illustrated is a functional concept and this does not always have to be physically configured as illustrated. That is to say, a specific mode of distribution and integration of each device is not limited to that illustrated. That is to say, it is possible to configure an entire or a part thereof in a manner functionally or physically distributed or integrated in an optional unit according to various loads and usage conditions. Furthermore, an entire or an optional part of each processing function performed by each device may be realized by a CPU and a program analyzed and executed by the CPU or may be realized as hardware by wired logic.

### Hardware

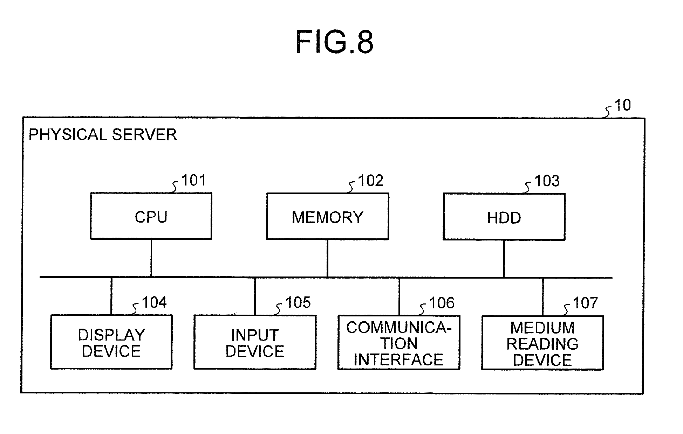

FIG. 8 is a view of a hardware configuration example of the physical server. As illustrated in FIG. 8, the physical server 10 includes a CPU 101, a memory 102, a HDD (hard disk drive) 103, a medium reading device 107, a communication interface 106, an input device 105, and a display device 104. Units illustrated in FIG. 8 are connected to one another by means of a bus and the like.

The HDD 103 stores a program and a table which allow the function illustrated in FIG. 2 to operate. Although the HDD 103 is taken as an example of a recording medium, this may also be a ROM (read only memory) or a RAM.

The medium reading device 107 is a device which reads a storage medium such as a CD and a DVD. For example, the medium reading device 107 may also read various programs from another computer-readable recording medium such as a CD-ROM to execute. Meanwhile, it is also possible that the recording medium is arranged in a distant place and a computer accesses the storage medium, thereby obtaining the program to use. At that time, it is also possible that the obtained program is stored in the recording medium of the computer itself to be used.

The communication interface 106 is a network interface card and the like. The input device 105 is a keyboard and the like, for example, and the display device 104 is a display device which displays various types of information such as a touch panel and a display, for example.

The CPU 101 allows a process of executing each function illustrated in FIG. 2 and the like to run by reading the program which executes a process similar to that of each processor illustrated in FIG. 2 from the HDD 103 and the like to expand in the memory 102. That is to say, the process executes a function similar to that of each process of the physical server 10. Specifically, the CPU 101 reads the program having the function similar to that of the virtual control unit 13 and the like from the HDD 103 and the like. Then, the CPU 101 executes a process of executing the process similar to that of each processor.

In this manner, the physical server 10 operates as the information processing device which executes the transmission control method by reading the program to execute. The physical server 10 may also realize the function similar to that of the above-described embodiments by reading the above-described program from the recording medium by the medium reading device and executing the above-described read program. Meanwhile, the program in another embodiment is not limited to that executed by the physical server 10. For example, the present invention may also be similarly applied to a case in which another computer or server executes the program or to a case in which they execute the program in cooperation with each other.

According to a first aspect of the present invention, both of the improvement in communication performance between the virtual machines and the flexible control by the virtual switch may be satisfied.

## Claims

1. An information processing device (10), comprising:
a storage unit (13a) that stores address information of at least one virtual machine (15,17) which is run on a same physical machine;
a determining unit (13b) that determines whether a destination of a packet is stored in the storage unit (13a) when the virtual machine transmits the packet; and
a transmission control unit (16c,18c) that transmits the packet to the destination by using a virtual device (16a) connected to a first virtual switch (14c) which relays a communication between the virtual machines when the determining unit (13b) determines that the destination is stored in the storage unit (13a) and transmits the packet to the destination by using a pass-through device (16b) which is connected to a physical device (11a) transmitting a packet to another physical machine when the determining unit (13b) determines that the destination is not stored in the storage unit (13a).

2. The information processing device (10) according to claim 1, further comprising:
a virtual control unit (13) that executes the virtual machine (15,17), wherein
the virtual control unit (13) includes the storage unit (13a), and
the virtual machine (15,17) includes the determining unit (13b), the transmission control unit (16c,18c) and a holding unit that holds a duplicate of the address information of the virtual machine stored in the storage unit (13a).

3. The information processing device (10) according to claim 2, wherein, when a state of the virtual machine is changed, the virtual control unit (13) updates the address information stored in the storage unit (13a) according to a changed state of the virtual machine and distributes updated address information to the virtual machine.

4. The information processing device (10) according to claim 1, further comprising:
a virtual control unit (13) that executes the virtual machine,
wherein the virtual control unit (13) stores the address information in a shared memory which another process is able to refer to, and
the virtual machine (15,17) includes the transmission control unit (16c,18c) and a determining unit that determines whether the destination of the packet is stored in the shared memory when the virtual machine transmit the packet.

5. The information processing device (10) according any one of claim 1 to 4, wherein,
the virtual machine includes the virtual device, the pass-through device and a second virtual switch that connects the virtual device and the pass-through device to each other, and
the second virtual switch learns a destination of the virtual device and the pass-through device by transmission and reception of the packet and stores a learned result in the storage unit.

6. A transmission control method comprising:
determining whether a destination of a packet is stored in a storage unit by referring to the storage unit that stores address information of at least one virtual machine which is run on a same physical machine when the virtual machine transmits the packet; and
transmitting the packet to the destination by using a virtual device connected to a virtual switch which relays a communication between the virtual machines when determining that the destination is stored in the storage unit and transmitting the packet to the destination by using a pass-through device which is connected to a physical device transmitting a packet to another physical machine when determining that the destination is not stored in the storage unit.

7. A transmission control program causing a computer (10) to execute a process comprising:
determining whether a destination of a packet is stored in a storage unit by referring to the storage unit that stores address information of at least one virtual machine which is run on a same physical machine when the virtual machine transmits the packet; and
transmitting the packet to the destination by using a virtual device connected to a virtual switch which relays a communication between the virtual machines when determining that the destination is stored in the storage unit and transmitting the packet to the destination by using a pass-through device which is connected to a physical device transmitting a packet to another physical machine when determining that the destination is not stored in the storage unit.
